# DEMANDE DE BREVET EUROPEEN

(11) **EP 1 148 696 A1**
(43) Date de publication de la demande: **24.10.2001**
(21) Numéro de dépôt: 01430012.3
(22) Date de dépôt: 23.03.2001
(51) Int. Cl.: H04M 1/725, H04Q 7/22

(54) **Procédé permettant l'impression sur un support papier de messages type texto émis depuis un téléphone portable**

(30) Priorité: 29.03.2000 FR 0004182
(71) Demandeur: Meriaux, Eric, 13710 Fuveau (FR)
(72) Inventeur: Meriaux, Eric, 13710 Fuveau (FR)

(57) **Abrégé**

Procédé permettant l'impression de messages type « texto » émis depuis un téléphone portable, en vue de pouvoir disposer de ce message sous une forme écrite sur un support papier ou autre.

L'invention concerne un procédé permettant la conversion de messages écrits, type texto, émis depuis un téléphone portable vers un autre téléphone portable, depuis une forme texte stockée sous une forme de données informatiques, soit au niveau de l'appareil téléphonique, soit au niveau du serveur du fournisseur téléphonique, vers un moyen d'impression, en vue d'obtenir ce message sous la forme d'un écrit sur support papier ou autre.

L'invention permet à l'utilisateur de transmettre un message à un serveur spécialisé, qui procédera à son impression. Le procédé permet de retransmettre un message émis par l'utilisateur, ou un message reçu d'un autre utilisateur. Une fois imprimé, le message sera mis à disposition de l'utilisateur demandeur, soit au niveau de l'agence commerciale du fournisseur téléphonique, soit expédié sous pli postal au domicile de l'utilisateur, ou par tout autre moyen pouvant assurer la transmission du document d'une façon personnelle et fiable, et si besoin, confidentielle.

## Description

Dans l'état actuel, les messages alphanumériques, type « texto », rédigés et émis à partir d'un téléphone portable, et réceptionnés par un autre téléphone portable, sont stockés sous forme de fichiers informatiques, soit au niveaù de l'appareil téléphone portable émetteur, soit au niveau de l'appareil téléphone portable récepteur, soit éventuellement au niveau du serveur téléphonique ayant assuré la liaison entre les deux téléphones portables.

Le procédé actuel présente les inconvénients suivants : le contenu du message type texto est stocké provisoirement sous forme de données informatiques, volatiles ou non.

la nature et l'objet des messages texto sont d'importances très différentes: transmission de données ou de coordonnées chiffrées telles que numéro de téléphone, coordonnées bancaires, etc, transmission d'informations d'ordre domestique ou logistique, ou des messages amoureux.

Dans beaucoup de cas, les messages revêtent un contenu d'importance administrative, logistique ou sentimentale pour les utilisateurs.

le procédé objet de l'invention prévoit la retransmission du texto depuis un téléphone portable vers un serveur spécialisé et dédié à cette tache, lorsque l'utilisateur en éprouve le besoin ou le désir.

Cette opération est réalisée de façon simple, sans mise en oeuvre, ni matériels particuliers, par l'utilisation du téléphone portable du demandeur, en utilisant la fonction adéquate, et ce, que ce soit pour un message émis ou reçu. L'opération est réalisable dès la présence du message type « texto » au niveau de la mémoire du téléphone portable.

Le serveur spécialisé est contacté grâce à un numéro d'appel spécifique, mis en oeuvre par l'opérateur téléphonique, et communiqué au préalable à ses clients.

A réception d'un message type « texto », le serveur identifie grâce à son numéro d'émission, la provenance et l'identité du client demandeur. Le serveur spécialisé et dédié à cette tache peut alors procéder d'une façon automatique à l'impression du message type « texto », accompagnée de toutes autres informations si elles sont disponibles, à savoir : date et heure de réception, identité et numéro de ligne de l'émetteur, identité et numéro de ligne du récepteur.

Le support utilisé pourra être du type papier ou autre, permettant une mise sous pli ultérieure.

Le message type « texto » une fois imprimé pourra être mis à la disposition du demandeur au guichet d'une agence commerciale, ou lui être expédié sous pli postal, soit à l'adresse du demandeur, soit à une autre adresse qu'il aura préalablement désignée. Le serveur dédié à cette tache présente l'intérêt de pouvoir éventuellement être doté d'un système de sauvegarde, qui permette de stocker pour une durée indéterminée les messages type « texto ». De ce fait, l'impression des messages type « texto » peut être réalisée à plusieurs reprises, dans le cas de demandes répétées de la part de l'utilisateur.

## Revendications

1. Procédé permettant la conversion d'un message alphanumérique type « texto » , émis ou reçu par un téléphone portable, stocké provisoirement sous forme de données informatiques, volatiles ou non, en un message imprimé sur un support papier ou autre, grâce à la mise en oeuvre d'un serveur spécialisé pour l'impression de ces messages type « texto ».

2. procédé de conversion d'un message type « texto » de téléphone portable vers un support écrit, **caractérisé en ce que** le message originel puisse devenir un message dont le serveur spécialisé à assuré une sauvegarde spécifique, dont la retransmission imprimée puisse être éventuellement répétitive sur demande de l'utilisateur.
